# EUROPEAN PATENT SPECIFICATION

(11) **EP 2 364 879 B1**
(45) Date of publication and mention of the grant of the patent: **31.07.2013**
(21) Application number: 11250266.1
(22) Date of filing: 08.03.2011
(51) Int. Cl.: B60R 9/048, B60R 9/045

(54) **Ladder clamping structure for ladder racks**
Leiterklammerstruktur für Leitergestelle
Structure de serrage d'échelle pour crémaillères

(30) Priority: 08.03.2010 US 719573
(43) Date of publication of application: 14.09.2011
(73) Proprietor: Levi, Avraham Y., Eagan, Minnesota 55121 (US)
(72) Inventor: Levi, Avraham Y., Eagan, Minnesota 55121 (US)
(74) Representative: Charig, Raymond Julian

(56) References cited:
- WO-A2-2009/140496
- FR-A1- 2 632 040
- US-A- 3 722 766

## Description

### Background of the Invention

I. Field of the Invention: This invention relates generally to roof or ladder racks mountable on the roof of motor vehicles for transporting one or more extension ladders and/or step ladders to a worksite, and more particularly to a roof rack with an improved clamp arrangement for securing such ladder loads onto the roof rack to prevent the loss of the ladder load during transport thereof.
II. Discussion of the Prior Art: Work vehicles, such as commercial vans, often incorporate a roof rack adapted to support cargo of one type or another to be used at a worksite. Such cargo often includes extension ladders and/or stepladders. To avoid loss of the cargo during transport and possible serious injuries to other motorists who may be traveling behind the work vehicle, various means have been devised for securing cargo, and especially ladders, to the ladder rack. For example, some have used bungee cords and ropes to tie ladders in place on the vehicle-mounted roof rack, but this is generally a considerable effort, especially given the height and placement of the ladder rack on the van roof.

Various other mechanisms have been devised for latching ladders onto a ladder rack and the below-listed patents represent illustrative efforts of other inventors to secure ladders in place.

| | |
|---|---|
| Falastich | 4,170,331 |
| Nutt | 4,262,834 |
| Weger, Jr. | 4,618,083 |
| Nutt | 4,813,585 |
| Sutton et al. | 5,186,588 |
| Finley | 5,242,094 |
| McLellan | 5,603,591 |
| Pyler | 6,290,113 |

For the most part, these prior art ladder rack assemblies are of a welded configuration having longitudinally extending side rails attached to transversely extending crossbar members by a welded connection, which limits the ability for a given design to be used on different van vehicle models because of the inability to adjust the welded configuration. In most prior art ladder racks, a pair of longitudinally extending side rails are held in parallel, spaced-apart relation by crossbar members extending therebetween and welded to the side rails.

WO2009/140496 A2 describes a vehicle roof storage system for securing a device such as a ladder to an exterior of a vehicle. It has a movable carrier member which holds one end of the ladder and assists in loading the ladder; a support at the second end of the ladder which assists in loading and a rotatable restraining cross member with a restraining and/or locking mechanism.

In contrast to what is described in the above-cited prior art, the roof rack and associated ladder clamping device of the present invention is fabricated from lightweight aluminum extrusions without the need for any welds. As such, racks can be packaged and shipped in a relatively small carton and assembled by the user using a single tool, namely, a socket wrench with a one-half inch socket. Because of the design of the extrusions employed for the side rails and crossbar members of the roof rack, even though the assembled rack is light in weight, it remains very rigid and able to support heavy loads without bending.

### SUMMARY OF THE INVENTION

The present invention is directed to a ladder clamping assembly for a vehicle roof rack where the roof rack includes a pair of spaced-apart, longitudinally extending side rails held in parallel relationship by a plurality of transversely extending crossbars that are clamped to the pair of side rails at opposed ends of the crossbars. Both the side rails and the crossbars comprise metal extrusions having clamping ridges extending along the length dimension thereof.

The ladder rack may include one or more ladder clamping assemblies. The ladder clamping assembly itself comprises an elongated hook bar that extends between and is clamped to the clamping ridges of adjacent ones of the plurality of crossbars. The hook bar supports a front hook member that is longitudinally positionable along the length dimension of the hook bar and is adapted to engage an upper ladder rung of a ladder when being carried on the vehicle roof rack to prevent forward movement of a ladder.

The ladder clamping assembly further comprises first and second bearing brackets that support a cylindrical rod and where the first and second bearing brackets are clamped to the clamping ridges of a common one of the plurality of crossbar members for journaling the cylindrical rod for rotation about an axis that is parallel to the crossbar members. A rear hook member is keyed to and clamped on the cylindrical rod at a location that is aligned with the hook bar and a crank arm is clamped to the cylindrical rod whereby manual rotation of the crank arm is adapted to bring the rear hook member into engagement with a lower ladder rung to prevent rearward movement of a ladder when being carried by the roof rack.

Further features, objects and advantages of the invention will become apparent to those skilled in the art from the following detailed description of a preferred embodiment, especially when considered in conjunction with the accompanying drawings in which like numerals in the several views refer to corresponding parts.

### DESCRIPTION OF THE DRAWINGS

Figure 1 is a perspective view of a roof rack incorporating a ladder clamping assembly in accordance with the present invention;
Figure 2 is an enlarged detailed drawing showing the manner in which a crossbar of the roof rack attaches to its side rail;
Figure 3 is an end view of the extrusion comprising the hook bar;
Figure 4 is an exploded detailed view illustrating the assembly of the hook bar to a crossbar of the roof rack and the attachment of a front horn tube to a side rail;
Figure 5 is a perspective view of a rear clamp assembly;
Figure 6 is an exploded view illustrating how the rear clamp assembly attaches to a rear crossbar; and

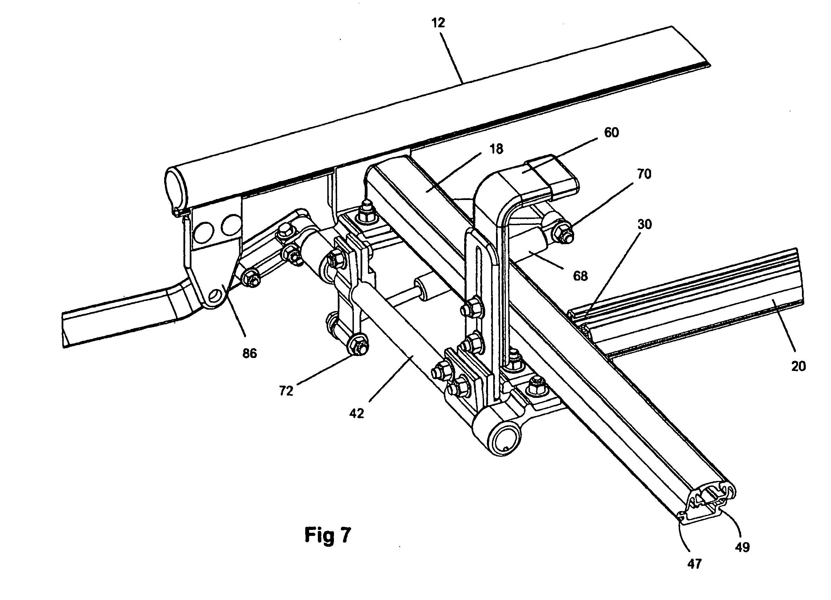

Figure 7 is a detailed view showing the rear clamp assembly assembled to the rear crossbar of the roof rack.

### DESCRIPTION OF THE PREFERRED EMBODIMENT

This description of the preferred embodiments is intended to be read in connection with the accompanying drawings, which are to be considered part of the entire written description of this invention. In the description, relative terms such as "lower", "upper", "horizontal", "vertical", "above", "below", "up", "down", "top" and "bottom" as well as derivatives thereof (e.g., "horizontally", "downwardly", "upwardly", etc.) should be construed to refer to the orientation as then described or as shown in the drawings under discussion. These relative terms are for convenience of description and do not require that the apparatus be constructed or operated in a particular orientation. Terms such as "connected", "connecting", "attached", "attaching", "join" and "joining" are used interchangeably and refer to one structure or surface being secured to another structure or surface or integrally fabricated in one piece, unless expressively described otherwise.

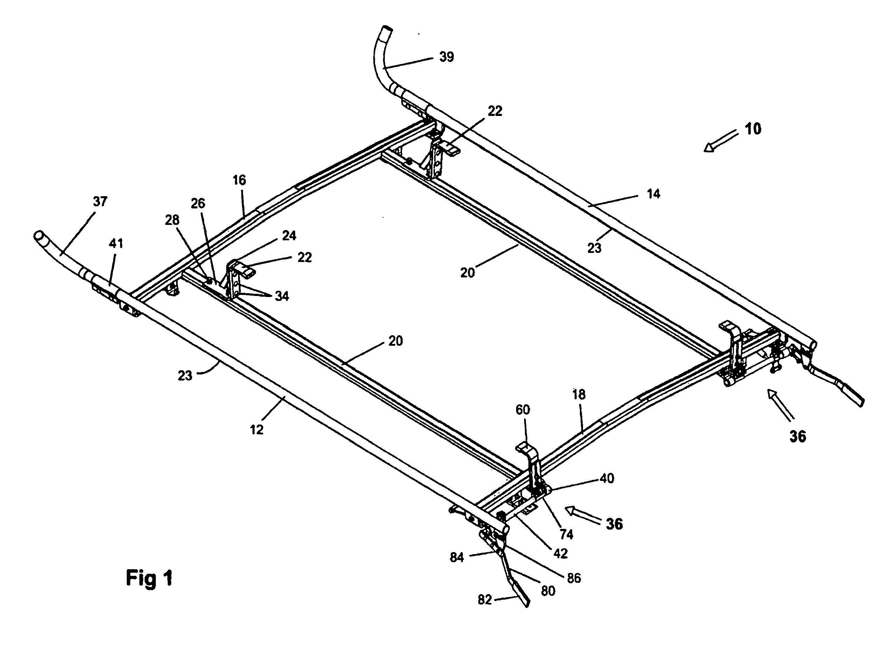

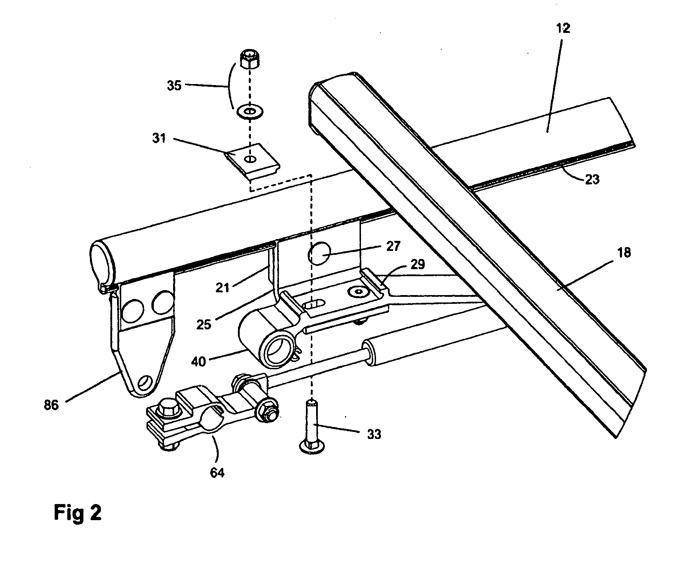

Referring first to Figure 1, a vehicle roof rack with ladder clamping devices of the present invention incorporated is indicated generally by numeral 10. It is seen to comprise a pair of tubular side rails 12 and 14 of extruded aluminum that are held in parallel, spaced-apart relationship to one another by a plurality of crossbars 16 and 18. The manner in which the crossbars attach to the side rails will be discussed later with the aid of Figure 2, but for now, it is suffice to say that these parts are clamped to one another rather than being welded as in most prior art roof racks. Extending along the length dimension of the tubular side rails 12 and 14 is a clamping ridge 23 (Figure 2) formed by the extrusion die to resemble an inverted T.

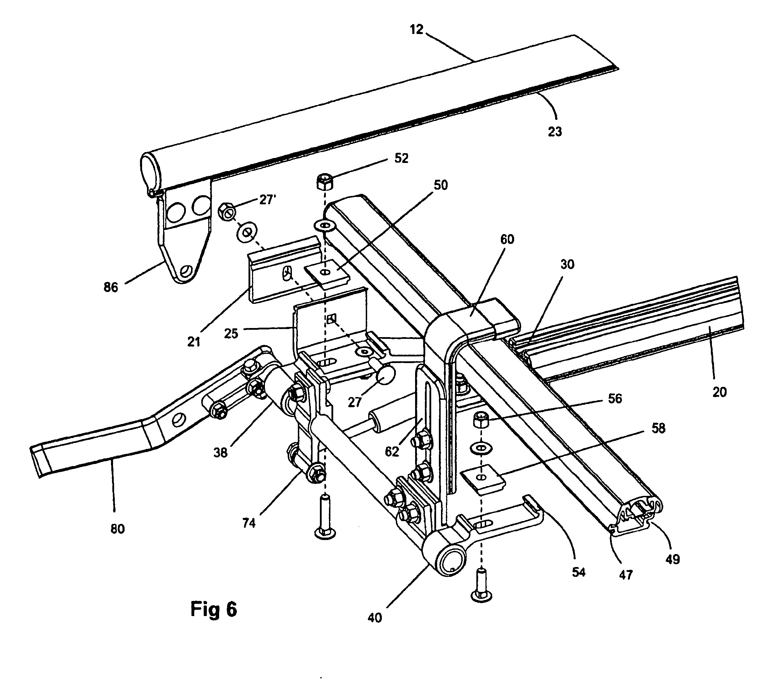

Figure 2 shows the manner in which the rear crossbar 18 is clamped and held to the right side rail member 12, taking advantage of clamping ridges formed on both the crossbar 18 and the side rail 12. As a first step, an L-shaped support bracket 25 is clamped to a clamping ridge 23 of the extruded side rail 12 using a clamping plate 21 1 where the clamping plate 21 and support bracket 25 are held together by a screw and bolts 27 and 27'. The left end of the crossbar 18 is then made to rest on the L-bracket 25 and then bearing bracket 40 and wedge plate 31 are made to engage the clamping ridges 47 and 49 of the crossbar 18 shown best in Figure 6. A shoulder bolt 33 is then inserted through the bearing bracket 40 and wedge plate 31 and a washer and ½" aircraft nut 35 are screwed onto the bolt 33 and tightened to move the wedge plate to the right and thereby rigidly clamp the left end of the crossbar 18 to the side rail 12.

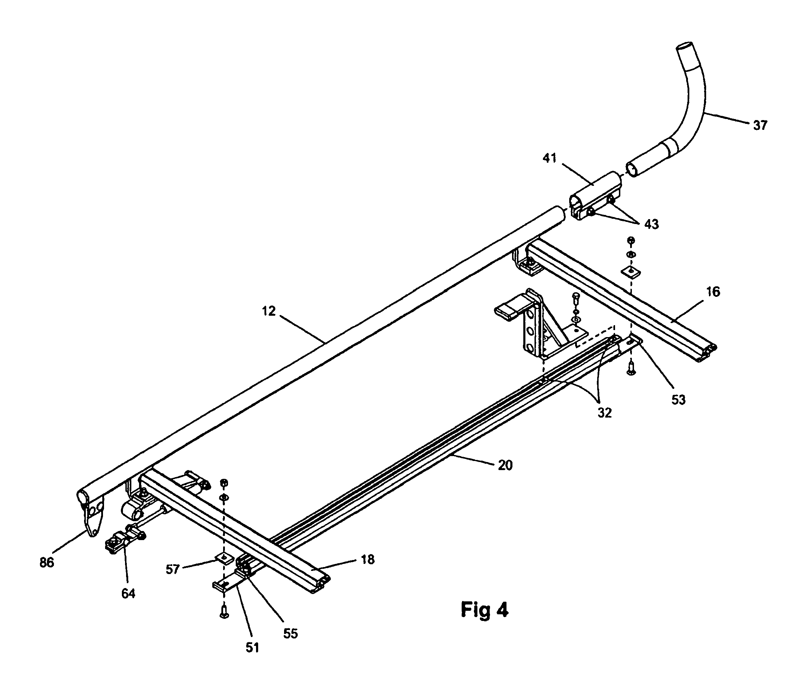

Attached to the front end of the side rails 12 and 14 are tubular horn members 37 and 39 comprising tubing that has been formed into an arcuate curve so as to extend upwardly and outwardly relative to the side rails to which they are attached. Without limitation, the horn members may lie in a plane that is about 30° to the vertical. Details of the attachment method can be seen in Figure 4 where a proximal end of the tubular horn 37 fits into a tubular clamp 41 that is designed to slip over the forward end of the side rail 12 and secured to the clamping ridge thereof upon tightening of the nuts 43.

With reference to Figures 1 and 4, extending between and clamped onto the crossbars 16 and 18 are hook bar extrusions 20 that supports front hook members 22 thereon. The front hook members each comprise a right angled bracket 24 having its base 26 affixed to the hook bar 20 so as to be adjustable therealong and when at a desired position is firmly held in place by snuggling down a pair of bolts 28 that fit into T-nuts 32 (Figure 4).

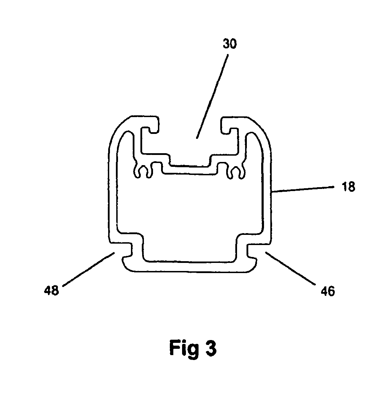

Figure 3 is an end view of the hook bar extrusions 20 and it can be seen that they incorporate a T-slot 30 in a top portion thereof into which T-nuts 32 are fitted, as shown in Figure 4. It will be appreciated that when the bolts 28 are loose, the front hook member 22 can be slid longitudinally with the T-nuts riding in the T-slot 30. When in a desired location that will engage a rung of a ladder to be transported, the bolts 28 are tightened to lock the front hook member 22 in place. The hook bar extrusions 20 also include clamping ridges 46 and 48 running the length thereof.

While not visible in Figure 1, the vertical leg of the right-angled bracket 24 has a longitudinal slot formed therein. Bolts (not shown) passing through the apertures 34 can ride up or down in that slot to allow adjustment the height of the hook 22 relative to the hook bar 20 and by tightening those bolts the selected height setting is maintained.

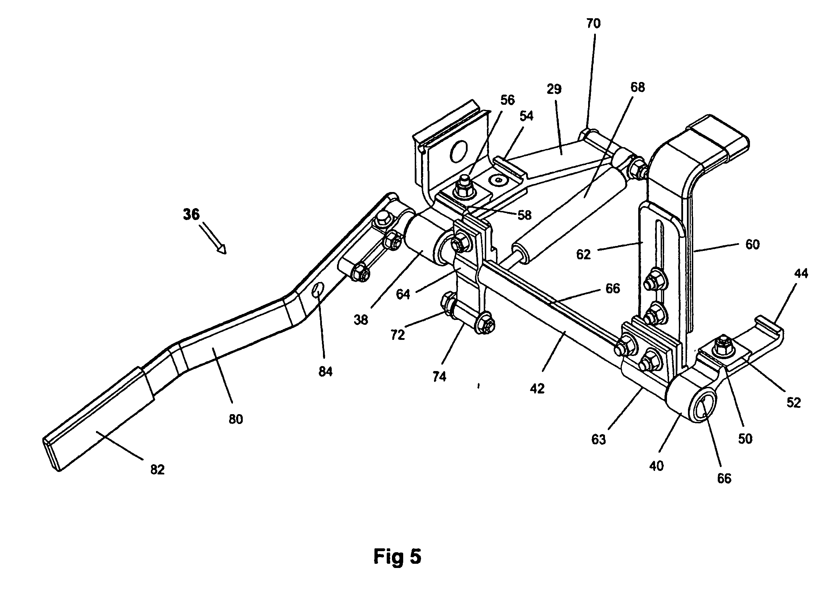

Clamped to the rearmost crossbar 18 is a rear clamp assembly indicated generally by numeral 36. Since they are identical in construction, only one assembly needs to be described. A perspective view of a rear clamp assembly detached from the roof rack is illustrated in Figure 5. Shown in Figure 5 is the first bearing bracket 38 and a second bearing bracket 40 used to support a cylindrical rod 42. The bearing bracket 38 is adapted to be clamped to the crossbar 18 as previously explained with the inwardly turned end portion 54 thereof engaging a clamping ridge 49 formed on the crossbar extrusion 18 as seen in Figure 6. A further clamping ridge 47 becomes engaged by wedge plate 58 and when the nut 56 is tightened, the wedge plate is camed to the right, causing the bracket 38 to become rigidly secured to the crossbar 18. The bearing bracket 40 is likewise secured to the crossbar 18 when the barb-like protuberance 44 engages the clamping ridge 49 and the nut 52 is tightened to move the wedge plate 50 into engagement with the clamping ridge 47 of the crossbar 18.

The cylindrical shaft 42 supports a rear hook member 60 thereon. More particularly, as seen in Figure 5, the rear hook member 60 is secured to a leg 62 that is bolted to a cylindrical hub 63 through which the cylindrical shaft 42 is made to pass. While not visible in Figure 5, projecting radially inward from the I.D. of the hub 63 is a key that is adapted to fit within a keyway 66 milled or otherwise formed in the surface of the cylindrical shaft 42. Thus, the hub 63 and the attached rear hook member 60 can be positioned axially along the length of the shaft 42 allowing the rear hook member to be aligned with the front hook member along the length of the hook bar 20.

As further seen in Figure 5, a gas spring 68 is operatively coupled between a rod clamping bracket 64 keyed to the shaft 42 and the bearing bracket 40. More particularly, the gas spring 68 has its cylinder segment bolted by a bolt 70 to the free end of leg 29 of bearing bracket 38 and its piston rod is secured by a bolt 72 to an extension 74 of the rod clamping bracket 38. The gas-filled spring consists of a precision rod attached to a piston moving within a sealed cylinder containing nitrogen at high pressure. Output forces are the result of the differential between the pressure in the cylinder and atmospheric pressure outside the cylinder acting on the cross section of the rod. As the piston rod is introduced into the cylinder (compression stroke), the internal pressure increases according to the volume of gas displaced by the rod. This increase in force is typically between 5% and 50%. In comparison to mechanical springs, gas springs are almost constant force. All gas springs contain a small amount of oil to lubricate the main seal and rod and provide end of stroke damping. Hence, the gas spring is preferably mounted with its rod inclined downward off horizontal. This allows the oil to reach the main seal, lubricating it and extending the life of the gas spring.

In the present application, the gas spring functions to urge the rear hook member 60 into engagement with a ladder rung thereby capturing the ladder between the front hook member 22 and the rear hook member 60. Manual rotation of the crank arm 80 in the clockwise direction when viewed in Figure 1 is required to overcome the force exerted by the gas spring when it is desired to release and remove a ladder from the roof rack. The amount of torque applied to the cylindrical rod 42 by manual actuation of the handle 82 must far exceed any force against the rear stop member 60 by the ladder load upon rapid acceleration of the work vehicle.

The crank arm 80 is clamped to the left end of the cylindrical rod 42 (Figure 5). Formed through the crank arm is an aperture 84. Clamped onto a clamping ridge 23 formed along the length dimension of the side rail 12 is a lock bracket 86 (Figure 6) that also has an aperture extending through its thickness dimension. When the rear hook member 60 is in its raised, ladder rung-engaging disposition, the aperture 84 in the handle 80 becomes aligned with the aperture in the lock plate 86. This allows the shackle of a padlock (not shown) to be passed through the aligned apertures and thereby lock the assembly, preventing removal of a stowed ladder.

From what has been described, those skilled in the art will appreciate that the present invention provides an improved mechanism for releasably securing ladders to a roof rack of a work vehicle that will safely hold such ladders in place during transit, but allowing the ladders to be quickly disengaged for removal and reloading from and to a roof rack when at the worksite. Turning of the crank in a counterclockwise direction functions to overcome the force of the gas spring and rotation of the rear hook member from its ladder rung-engaging state to a position where the rear hook member is generally horizontal and out of the way of the ladder rungs, allowing the operator, while standing on the ground, to lift the ladder over the horizontal portion of the adjacent side rail and have the lower end of the ladder reach the ground while the upper end of the ladder remains resting against the curved horn member. The operator may then reposition himself or herself and grasp the ladder at its balance point and carry it to the location where it is to be used.

In reloading a ladder onto the rack, it is carried in a generally vertical orientation alongside the vehicle and one side of the ladder is brought to rest against the curved and outwardly angled horn. The operator then lifts the rear end of the ladder and swings it over the adjacent side rail such that the ladder is now lying flat on the roof rack and is pushed forward until a leading rung proximate the top end of the ladder is brought into contact with the front hook member 22. Next, the crank handle 82 is rotated in a counterclockwise direction when viewed as in the accompanying drawings to thereby elevate the rear hook member and bring it into engagement with a different ladder rung such that the ladder is effectively trapped between the front and rear hook members. It can be locked for security purposes by using a padlock securing the handle 84 to the lock bracket 86 as previously described. Even without such a padlock arrangement, the gas spring 68 affords sufficient resistance against clockwise rotation of the rear hook member due to sudden acceleration of the vehicle, thereby preventing shifting of the ladder load.

This invention has been described herein in considerable detail in order to comply with the patent statutes and to provide those skilled in the art with the information needed to apply the novel principles and to construct and use such specialized components as are required. However, it is to be understood that the invention can be carried out by specifically different equipment and devices, and that various modifications, both as to the equipment and operating procedures, can be accomplished without departing from the scope of the invention itself.

## Claims

1. A ladder clamping assembly (36) for a vehicle ladder rack (10) where said vehicle ladder rack includes a pair of spaced-apart, longitudinally extending side rails (12, 14) held in parallel relationship by a plurality of transversely extending crossbars (16, 18) clamped to said pair of side rails (12, 14) at opposed ends of said crossbars, each of said side rails and said crossbars comprising metal extrusions having clamping ridges (46, 48) extending along the length dimensions thereof where the ladder clamping assembly comprises:
(a) an elongate hook bar (20) extending between and clamped to said clamping ridges (46, 48) of adjacent ones of said plurality of crossbars, said hook bar supporting a front hook member (22, 24) adapted to engage a ladder rung of a ladder when being carried on said vehicle ladder rack to prevent forward movement of a ladder;
(b) first and second bearing brackets (38, 40) supporting a cylindrical rod (42) and where said first and second bearing brackets (38, 40) are clamped to the clamping ridges (46, 48) of a common one (18) of the plurality of crossbar members (16, 18) for journaling the cylindrical rod for rotation about an axis that is parallel to said crossbar members;
(c) a rear hook member (60) keyed to and clamped on the cylindrical rod at a location aligned with the hook bar (20); and
(d) a crank arm (80) clamped to the cylindrical rod (42) whereby manual rotation of the crank arm is adapted to bring the rear hook member (60) into engagement with a ladder rung, other than the first ladder rung, to prevent rearward movement of a ladder when being carried by said ladder rack.

2. The ladder clamping assembly as in claim 1 and further including a gas spring (68) operatively disposed between one (38) of said first and second bearing brackets (38, 40) and a rod bracket (64) keyed to the cylindrical rod (42) for resiliently holding the rear hook member (60) in ladder rung engagement.

3. The ladder clamping assembly as in claim 1 wherein the length of the rear hook member (60) is adjustable.

4. The ladder clamping assembly as in claim 1 wherein the length of the front hook member (22, 24) is adjustable.

5. The ladder clamping assembly as in claim 1 wherein the front hook member (22, 24) is longitudinally positionable along the length dimension of the hook bar (20).

6. The ladder clamping assembly as in claim 1 and further including at least one aperture (84) formed through the crank arm (80) and a locking bracket (86) clamped to one of the pair of side rails (12, 14) and having an aperture (84) therethrough that becomes aligned with the at least one aperture formed through the crank arm when the crank arm has been rotated to bring the rear hook member (60) into engagement with said ladder rung, other than said first ladder rung, such that a shackle of a padlock can be made to pass through the aligned apertures.

7. The ladder clamping assembly as in claim 1 wherein the hook bar (20) comprises an elongate extrusion having a T-slot channel (30) formed in a top surface thereof and the front hook member (22, 24) is positionable along the T-slot channel (30) and fixedly attached to the hook bar by a screw passing through an aperture in the hook member and into a nut (32) captured in the T-slot channel (30).

## Patentansprüche

1. Leiterklammeranordnung (36) für ein Fahrzeugleitergestell (10), wobei das Fahrzeugleitergestell ein Paar von voneinander beabstandeten, sich longitudinal erstreckenden Seitenschienen (12, 14) umfasst, die in paralleler Beziehung durch eine Mehrzahl von sich transversal erstreckenden Querstangen (16, 18) gehalten werden, die an dem Paar von Seitenschienen (12, 14) an gegenüberliegenden Enden der Querstangen eingespannt sind, wobei jede der Seitenschienen und jede der Querstangen metallische Strangpreßprofile mit Klemmstegen (46, 48) umfassen, die sich entlang der Längenabmessungen derselben erstrecken, wobei die Leiterklammeranordnung umfasst:
(a) eine längliche Hakenstange (20), die sich zwischen den Klemmstegen (46, 48) von benachbarten der Mehrzahl von Querstangen erstreckt und an diesen eingespannt ist, wobei die Hakenstange ein vorderes Hakenelement (22, 24) trägt, das angepasst ist, um eine Leitersprosse einer Leiter in Eingriff zu nehmen, wenn sie auf dem Fahrzeugleitergestell getragen wird, um eine Vorwärtsbewegung einer Leiter zu verhindern;
(b) erste und zweite Lagerböcke (38, 40), die eine zylindrische Stange (42) tragen, und wobei die ersten und zweiten Lagerböcke (38, 40) an den Klemmstegen (46, 48) eines gemeinsamen (18) der Mehrzahl von Querstangenelementen (16, 18) eingespannt sind, zum drehbaren Anlenken der zylindrischen Stange zur Drehbewegung um eine Achse, die parallel zu den Querstangenelementen ist;
(c) ein hinteres Hakenelement (60), das auf die zylindrische Stange abgestimmt ist und an dieser an einem Ort eingespannt ist, der mit der Hakenstange (20) ausgerichtet ist; und
(d) einen Kurbelarm (80), der an der zylindrischen Stange (42) eingespannt ist, wodurch eine manuelle Drehbewegung des Kurbelarms angepasst ist, um das hintere Hakenelement (60) in Eingriff mit einer anderen Leitersprosse als die erste Leitersprosse zu bringen, um eine Rückwärtsbewegung einer Leiter zu verhindern, wenn sie von dem Leitergestell getragen wird.

2. Leiterklammeranordnung gemäß Anspruch 1, die ferner eine Gasfeder (68), die funktionsmäßig zwischen einem (38) der ersten und zweiten Lagerböcke (38, 40) angeordnet ist, und eine Stangenhalterung (64), die auf die zylindrische Stange (42) zum nachgiebigen Halten des hinteren Hakenelements (60) in Eingriff mit der Leitersprosse abgestimmt ist, umfasst.

3. Leiterklammeranordnung gemäß Anspruch 1, bei der die Länge des hinteren Hakenelements (60) einstellbar ist.

4. Leiterklammeranordnung gemäß Anspruch 1, bei der die Länge des vorderen Hakenelements (22, 24) einstellbar ist.

5. Leiterklammeranordnung gemäß Anspruch 1, bei der das vordere Hakenelement (22, 24) longitudinal entlang der Längenabmessung der Hakenstange (20) positionierbar ist.

6. Leiterklammeranordnung gemäß Anspruch 1, die ferner mindestens eine Öffnung (84), die durch den Kurbelarm (80) ausgebildet ist, und eine Verriegelungshalterung (86) umfasst, die an einer des Paars von Seitenschienen (12, 14) eingespannt ist und eine Öffnung (84) dahindurch aufweist, die mit der mindestens einen Öffnung ausgerichtet wird, die durch den Kurbelarm ausgebildet wird, wenn der Kurbelarm gedreht wurde, um das hintere Hakenelement (60) mit der anderen Leitersprosse als der ersten Leitersprosse derart in Eingriff zu bringen, dass ein Bügel eines Vorhängeschlosses dazu gebracht werden kann, durch die ausgerichteten Öffnungen zu laufen.

7. Leiterklammeranordnung gemäß Anspruch 1, bei der die Hakenstange (20) ein längliches Strangpreßprofil mit einem T-Nut-Kanal (30) umfasst, der in einer oberen Oberfläche davon ausgebildet ist, und das vordere Hakenelement (22, 24) entlang des T-Nut-Kanals (30) positionierbar ist und an der Hakenstange durch eine Schraube fest angebracht ist, die durch eine Öffnung in dem Hakenelement und in eine Mutter (32) läuft, die in dem T-Nut-Kanal (30) aufgenommen ist.

## Revendications

1. Ensemble de serrage d'échelle (36) pour un support d'échelle (10) de véhicule dans lequel ledit support d'échelle de véhicule comprend une paire de rails latéraux espacés, s'étendant longitudinalement (12, 14) maintenus en relation parallèle par une pluralité de traverses s'étendant de manière transversale (16, 18) bloquées sur ladite paire de rails latéraux (12, 14) aux extrémités opposées desdites traverses, chacun desdits rails latéraux et desdites traverses comprenant des extrusions métalliques ayant des crêtes de serrage (46, 48) s'étendant le long de leurs dimensions de longueur, dans lequel l'ensemble de serrage d'échelle comprend :
(a) une barre à crochet allongée (20) s'étendant entre et bloquée sur lesdites crêtes de serrage (46, 48) des traverses adjacentes de ladite pluralité de traverses, ladite barre à crochet supportant un premier élément de crochet avant (22, 24) adapté pour mettre en prise un échelon d'une échelle lorsqu'elle est portée sur ledit support d'échelle de véhicule pour empêcher le mouvement vers l'avant d'une échelle ;
(b) des première et seconde consoles de support (38, 40) supportant une tige cylindrique (42) et dans lequel lesdites première et seconde consoles de support (38, 40) sont serrées sur les crêtes de serrage (46, 48) d'un élément commun (18) de la pluralité d'éléments de traverse (16, 18) pour tourillonner la tige cylindrique afin qu'elle tourne autour d'un axe qui est parallèle auxdits éléments de traverse ;
(c) un élément de crochet arrière (60) claveté et bloqué sur une tige cylindrique à un emplacement aligné avec la barre de crochet (20) ; et
(d) un bras de manivelle (80) bloqué sur la tige cylindrique (42), moyennant quoi la rotation manuelle du bras de manivelle est adaptée pour amener l'élément de crochet arrière (60) en mise en prise avec un échelon, différent du premier échelon, afin d'empêcher le mouvement vers l'arrière d'une échelle lorsqu'elle est portée par ledit support d'échelle.

2. Ensemble de serrage d'échelle selon la revendication 1, et comprenant en outre un ressort à gaz (68) disposé de manière opérationnelle entre l'une (38) desdites première et seconde consoles de support (38, 40) et une console de tige (64) clavetée sur la tige cylindrique (42) pour maintenir, de manière élastique, l'élément de crochet arrière (60) en mise en prise d'échelon.

3. Ensemble de serrage d'échelle selon la revendication 1, dans lequel la longueur de l'élément de crochet arrière (60) est ajustable.

4. Ensemble de serrage d'échelle selon la revendication 1, dans lequel la longueur de l'élément de crochet avant (22, 24) est ajustable.

5. Ensemble de serrage d'échelle selon la revendication 1, dans lequel l'élément de crochet avant (22, 24) peut être positionné de manière longitudinale le long de la dimension de longueur de la barre à crochet (20).

6. Ensemble de serrage d'échelle selon la revendication 1, et comprenant en outre au moins une ouverture (84) formée à travers le bras de manivelle (80) et une console de blocage (86) bloquée sur l'un de la paire de rails latéraux (12, 14) et ayant une ouverture (84) à travers ce dernier qui est alignée avec la au moins une ouverture formée à travers le bras de manivelle lorsque le bras de manivelle est entraîné en rotation pour amener l'élément de crochet arrière (60) en mise en prise avec ledit échelon différent dudit premier échelon, de sorte que l'on peut faire passer un maillon d'un cadenas à travers les ouvertures alignées.

7. Ensemble de serrage d'échelle selon la revendication 1, dans lequel la barre à crochet (20) comprend une extrusion allongée ayant un canal fendu en forme de T (30) formé sur sa surface supérieure et l'élément de crochet avant (22, 24) peut être positionné le long du canal fendu en forme de T (30) et fixé de manière fixe sur la barre à crochet par une vis passant à travers une ouverture dans l'élément de crochet et dans un écrou (32) encastré dans le canal fendu en forme de T (30).
